(19) Europäisches Patentamt
European Patent Office
Office européen des brevets

(11) EP 1 533 327 A1

(12) # EUROPEAN PATENT APPLICATION

(43) Date of publication:
25.05.2005 Bulletin 2005/21

(51) Int Cl.[7]: **C08F 293/00**, C08F 2/38

(21) Application number: **03025935.2**

(22) Date of filing: **13.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **ETH Zürich**
**8092 Zürich (CH)**

(72) Inventors:
- **Butté Alessandro**
**8005 Zürich (CH)**
- **Quattrini Francesca**
**3904 Naters (CH)**
- **Storti Giuseppe**
**26900 Lodi (IT)**
- **Morbidelli Massimo**
**8046 Zürich (CH)**

(74) Representative: **Irniger, Ernst**
**Troesch Scheidegger Werner AG,**
**Schwäntenmos 14**
**8126 Zumikon (CH)**

(54) **Process for producing homo- and co- polymers by RAFT emulsion polymerization**

(57) A novel process to produce homo- and co-polymers by RAFT polymerization in emulsion is here disclosed. The invention mixes two different existing technologies: emulsion polymerization and living free radical polymerization (LFRP) by RAFT. Emulsion provides the necessary radical segregation in order to reduce bimolecular terminations and to increase the polymerization rate. The presence of the RAFT agent assures the living mechanism. RAFT agents are often characterized by very low water solubility and, once put in emulsion, they do not participate the reaction. On the other hand, compounds able to form a water soluble complex with the RAFT agent (e.g., cyclodextrins) can help the transport across the water phase of the RAFT agent to the polymer particles. Accordingly, chains can grow through the entire process in a highly controlled way. This generally leads to the production of low polydispersity polymers with well defined structure and end functionalities. It is worth nothing that, since the RAFT reaction does not affect the radical concentration in the particle, the same polymerization rate as in a conventional polymerization process is obtained. Moreover, since polymer chains are still living at the end of the process, they can be re-started thus producing block copolymers.

EP 1 533 327 A1

## Description

### Field of the Invention

This invention generally relates to a method for the formation of polymers in emulsion polymerization by living radical polymerization, and more particularly, to a process for forming homo- and (block)copolymers by Reversible Addition Fragmentation Transfer (RAFT) in a aqueous system using a macromolecular organic compound having a hydrophobic cavity.

### Background of the Invention

This invention relates to a new process for producing polymers according to a living mechanism in radical emulsion polymerization. Benefits of living free radical polymerization (LFRP), of emulsion polymerization and, most of all, of the combination of the previous two techniques are well described in EP 1,205,492, which is incorporated herein by reference. In particular, it is described the application of LFRP by RAFT, which distinguish itself from other LFRP techniques in the kinetics of the living reaction.

LFRP by RAFT is comprehensively described in several patents (see e.g. US 6,512,081, US 6,376,626 and WO 98/01478). As stated in EP 1,205,492, the active species responsible for the living mechanism by RAFT (the RAFT agent, in the following) may be very hydrophobic, and their application to a conventional (also called ab-initio) emulsion polymerization may be difficult and may cause the following problems: (i) formation of coagulum, (ii) pooling effects and (iii) production of polymer under non-living conditions. In the EP 1,205,492 the problem is solved by coupling LFRP by RAFT with miniemulsion polymerization.

### Objects of the present invention

The main object of the present invention is to propose an alternative way to overcome the above mentioned problems without the need of a miniemulsion polymerization as known out of the EP 1 205 492.

In particular it is therefore an object of the present invention to join all together the flexibility of free radical polymerization (FRP), the large productivity of emulsion and the control upon the polymer chain formation of living systems.

A further object of the invention is to provide for a tool to produce polymers by living free radical polymerization at a high rate.

A further object of the invention is to provide for a tool to produce living polymer by using very low water soluble RAFT agents.

A further object of the invention is to provide for a tool to produce a broad range of polymers by living free radical polymerization with controlled microstructure, e.g. star polymers, branched polymers, graft polymers or polymers with small polydispersity values of the molecular weight distribution.

A further object of the invention is to provide for a tool to produce a large variety of monomer sequences inside the polymer chain (or simply block co-polymers), where each monomer sequence is comprising of a single monomer (homopolymer) or of more than one monomer (random or alternating copolymer) by living free radical polymerization.

A further object of the invention is to provide for a tool to produce polymer chains with chain ends that can be functionalized in quantitative yields.

A further object of the invention is to provide for a tool to produce polymers by living free radical polymerization at mild temperature conditions (e.g. from 40 to 100°C).

A further object of the invention is to provide for a tool to polymerize a monomer up to very large conversions, while keeping the viscosity of the system low.

A final object of the invention is to provide for a tool to produce polymers by living free radical polymerization which guarantees all the typical advantages of the emulsion polymerization, i.e. low medium viscosity, large heat transfer rates and, most of all, large polymerization rates.

Other objects and advantages of the present invention will become apparent from the following descriptions, taken in connection with the accompanying drawings, wherein, by way of illustration and example, an embodiment of the present invention is disclosed.

There are several examples in the literature of application of LFRP by RAFT in emulsion polymerization, using different RAFT agents. Several reports have shown that the use of dithioesters as RAFT agents in emulsion may lead to substantial retardation, high level of grit and polymer with poor control (see, for example, *Journal of Polymer Science: Part A: Polymer Chemistry,* 2000, 38, 3864 or *Macromolecules,* 2002, 35, 5417). As it is also disclosed herein, the use of very low water soluble dithioesters as RAFT agents in emulsion polymerization may lead to non-living polymerizations

and large formation of coagulum. Other dithiocompounds, such as xantates, are less prone to grit formation, but they exhibit much less control over polymer characteristics than dithioesters (see, for example, *Macromolecular Symposia*, 2000, 150, 23 and *Journal of Polymer Science: Part A: Polymer Chemistry,* 2000, 38, 4206). In US 6,518,364, RAFT in emulsion is reported using a novel class of RAFT agents. Possible explanations for such behaviors, as well as other problems that may occur in the use of RAFT agents in emulsion, are described in EP 1,205,492.

Those skilled in the art appreciate that a specific RAFT agent is particularly useful for the control of particular monomers and monomer mixtures. Moreover, since in LFRP by RAFT, the RAFT agent determines the chain ends of the polymer, specific RAFT agents are particularly useful for the particular chain end functionalization of the polymer. Thus a need exists for a technique that allows to carry out a LFRP by RAFT in emulsion without any or small limitations in the choice of the RAFT agent, even when the specific RAFT agent exhibits a very low water solubility.

Surprisingly it has been found that agents such as e.g. cyclodextrins (afterwards called CDs) are specifically suitable to carry out an LFRP by RAFT in emulsion without the need for executing the reaction under miniemulsion polymerization conditions.

Cyclodextrins (CDs) are industrially produced by enzymatic conversion of starch and are cyclic oligoamyloses consisting of 6 ($\alpha$), 7 ($\beta$), 8 ($\gamma$) or 9 ($\delta$) units of $\alpha$-1,4-linked D-glucose units. Through the modification of these native CDs, they become effective templates for the generation of a wide range of molecular hosts. The CDs are able to enclose smaller molecules to form host-guest complexes, because of their unique conical, tube-like shape, which forms a hydrophobic interior where the guest molecule is entrapped, and a hydrophilic exterior that solubilize the complex in water. Water insoluble molecules become water soluble on treatment with aqueous solutions of CDs without any chemical modification of the guest molecule, because there are no covalent bonds formed (see e.g. *Angewandte Chemie, International Edition,* 1994, 33, 803).

The CDs have been used to complex monomer with low water solubility (e.g., styrene or methyl methacrylate) and to carry out polymerizations in aqueous phase (see e.g. *Macromolecular Rapid Communications,* 2000, 21, 236). This technique also allows for the copolymerization of water insoluble and water soluble monomers (see e.g. *Macromolecules,* 2000, 33, 4361). Also, LFRP by ATRP has been reported in aqueous solution (see e.g. DE 100 27 46 and *Macromolecular Rapid Communications,* 2000, 21, 1342). In all these cases, an almost equimolar amount of CD and monomer has been used.

When used in catalytic amounts, CDs have been applied to produce emulsion polymerizations. It is believed that as a result of the complexation with CDs, monomers with low water solubility have an increased concentration in the water phase and are still reactive towards polymerization. After polymerization is started in the water phase, the polymer chains start growing in water and CDs are progressively push away from the polymer which becomes increasingly water insoluble. At this point, the polymer either precipitates to form a new locus for polymerization or it enters a micelle. In either ways, an emulsion polymerization is formed. Accordingly, it is possible to say that the role of CDs in the polymerization is that of phase transfer agents.

CDs have additional advantages when applied to emulsion polymerization. In fact, it has been found that CDs can be used to stabilize latexes in alternative to classical surfactants (see e.g. *Macromolecules,* 2003, 36, 50) or to produce very narrow particle size distributions (see e.g. US 2002/017610). In particular, in several patents it is reported that CDs can help to copolymerize very low water soluble monomers in the presence of monomer with higher water solubility (see e.g. WO 97/09354, EP 780,401 and EP 890,592).

It is reported (see e.g. US 5,521,266) that emulsion polymerization generally may be carried out successfully if the starting monomers do not have very low water solubility. However, problems are encountered if an emulsion polymerization is carried out in the presence of at least one monomer having very low water solubility. In US 5,521,266, these problems are described, which include poor conversion of the monomer having very low water solubility, and high gel or coagulum levels. Possible remedies are also discussed, such as addition of an organic solvent or the use of a high level of surfactant. However, note that the addition of an organic solvent or high level of surfactant poses safety, health and environmental problems, in addition to cost and operative drawbacks. The addition of a solvent may also destabilize aqueous systems to which it is added. Although the mechanism is not reported, it is shown in US 5,521,266 that the introduction of CDs is beneficial to this respect, and very low water soluble monomers are effectively copolymerized with monomer with larger water solubility.

Conceptually, carrying out an emulsion polymerization of a hydrophobic monomer, i.e. with low water solubility, in the presence of a RAFT agent having very low water solubility, poses the same problems as trying to copolymerize it with a very low water soluble comonomer. That is, the RAFT agent is most likely going not to be included in the formed polymer and to give origin to pooling effects around the shaft and/or coagulum. In particular, it is expected that the RAFT agent is not uniformly included in the formed polymer, which in turn does not grow following a living mechanism, i.e. with poor control and without the ability to restart to form block copolymers.

In this invention, we discovered that RAFT agents are effectively included in the polymerization by the use of CDs. In particular, we discovered that the resulting polymer formed in emulsion shows living characteristics since the beginning of the reaction and therefore it grows in a controlled way. Moreover, this invention is therefore different from

the aforementioned inventions in that the introduction of the RAFT agent in the polymerization dramatically changes the polymerization kinetics and allows for the aforementioned advantages in terms of control of the polymer growth, of choice of the polymer architecture and composition, and of capabilities of polymer chain end functionalization.

Advantages of the introduction of the CDs are: (i) Cyclodextrins can solubilize the RAFT agent in the water phase, without reacting with it, so that the capabilities of the RAFT agent of producing a living polymerization remain unaffected; (ii) Cyclodextrins remains in the water phase and they can be separated and recycled at the end of the process. (iii) Cyclodextrins do not show any particular health problem for humans, as testified by WO 01/100524 and by US 2002/0071870, where CDs are used to stabilize food products and pharmaceutical drugs, respectively. (iv) CDs can be used to stabilize the latex particles instead of using the conventional surfactants, and to produce emulsion latexes with very narrow PDS when used in the absence of a conventional surfactant (see US 2002/0173610). (v) Once the entire RAFT agent has been delivered to the polymer particles, the CD remains always available to carry other molecules and/or monomers with very low water solubility (e.g., insoluble monomers, dyes, etc.), as reported in US 5,521,266.

As a consequence, the following method of forming polymer by living free radical polymerization by RAFT in emulsion in the presence of a macromolecular organic compound having a hydrophobic cavity is disclosed. The method comprises:

(a) complexing the RAFT agent necessary to perform the living polymerization with a macromolecular organic compound having a hydrophobic cavity; and

(b) polymerizing at least a hydrophobic monomer from about 0.1% to 100% in weight in an aqueous system in the presence of a radical initiator for a time sufficient to form the polymer.

The resulting polymer is generally characterized by a controlled microstructure, e.g. with low polydispersity values of the molecular weight distribution, and well-defined polymer chain ends. The method may be carried out as a batch, semi-batch and continuous reaction. The polymerization may also be carried out as a part of a sequential polymerization, i.e. with the addition of other monomer to system in order to produce a block polymer.

The drawings constitute a part of this specification and include exemplary embodiments to the invention, which may be embodied in various forms. It is to be understood that in some instances various aspects of the invention may be shown exaggerated or enlarged to facilitate an understanding of the invention.

**<u>Brief Description of the Drawings</u>**

- Figure 1 - Mechanisms of the reversible addition-fragmentation transfer reaction.

- Figure 2 - General structures of the transfer agents which may be used to start the reversible addition-fragmentation transfer reaction.

- Figure 3 - (a) Conversion vs. time and (b) average molecular weight (MW) and polydispersity vs. conversion plots for the methyl methacrylate emulsion LFRP by RAFT of Example 3. Theoretical number average molecular weight has been computed according to the initial molar ratio between monomer and RAFT agent. Lines are intended for eye guideline only, while experimental data are represented by points.

- Figure 4 - Measured normalized molecular weight distribution for the methyl methacrylate emulsion LFRP by RAFT of Example 3. Numbers refer to the respective measured conversion values.

- Figure 5 - Evolution of the molecular weight distribution (MWD) is reported together with the average molecular weight and polydispersity referring to the conversion of example 3.

- Figure 6 - A SEM (scanning electron microscopy) - picture of the final latex according to example 3 confirming that the latex is quite monomodal.

- Figure 7 - Referring to example 4 the MWD traces are reported as detected by GPC (gel chromatography).

- Figure 8a - Referring to example 5 the conversion versus reaction line is reported; and

- Figure 8b - Shows the evolution of average molecular weight and polydispersity of the MWD.

**Detailed Description of the Preferred Embodiments**

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

The invention discloses a method for forming polymers of the general formula (C) and (D) (see Figure 2) in emulsion by living free radical polymerization, including e.g. the steps of:

(a) complexing at least one RAFT agent with very low water solubility, of general formula (A) and (B) (see Figure 2) with cyclodextrins; and

(b) polymerizing at least a monomer with low water solubility, from about 0.1% to 100% by weight of the total polymer, in an aqueous system in the presence of free radicals produced from a free radical source, and for a time sufficient to form the polymer.

The resulting polymer is generally characterized by a controlled microstructure, with low polydispersity values of the molecular weight distribution, and well-defined polymer chain ends. The polymer of formula (C) is made by contacting the monomer and (A), and the polymer of formula (B) is made by contacting the monomer and (D).

The method may be carried out as a batch, semi-batch and continuous reaction. The polymerization may also be carried out as a part of a sequential polymerization, i.e. with the addition of other monomer to system in order to produce a block polymer.

While the present invention discloses a method for carrying out a living free radical polymerization in emulsion without the use of organic solvents, these solvents may actually be present during the polymerization. It is, however, preferable that no solvent be present during the polymerization.

The first step of the invention is complexing the RAFT agent, necessary to perform the polymerization reaction according to a RAFT living mechanism, with the cyclodextrin. The cyclodextrin may be added to the reaction vessel before, during or after the monomer mixture and the RAFT agent has been charged. Preferably, the RAFT agent and the cyclodextrin may be mixed separately and the complexed mixture may be added to the reaction vessel. Even more preferably, the RAFT agent and the cyclodextrin may be mixed separately in the presence of water and the complexed mixture may be added to the reaction vessel.

The molar ratio of the cyclodextrin complexed with the RAFT agent having very low water solubility depends on the type of cyclodextrin and the type of RAFT agent. Generally, the molar ratio of cyclodextrin to RAFT agent is from about 100:1 to about 1:100, preferably from about 20:1 to about 1:5, and most preferably from about 10:1 to about 1:1.

The present method of the invention is not limited to the case where the cyclodextrin and/or the complexed mixture between the cyclodextrin and the RAFT agent are added before the polymerization step. The cyclodextrin and/or the complexed mixture may be added before and/or during the polymerization step. Optionally, the cyclodextrin and/or the complexed mixture may be added after the polymerization step. In this way, a polymer is first grown under non-living conditions and a new polymerization step may be added to grow a second polymer under living conditions.

As used herein, the term "cyclodextrin(s)" not only refers to the class of cyclodextrins itself, but more in general to every macromolecular organic compound having a hydrophobic cavity and being able to form stable and water soluble complexes with the RAFT agent, and even more in general to compounds acting as phase transfer agents. Accordingly, the term "cyclodextrin(s)" includes cyclodextrins, all the cyclodextrin derivatives, and cyclic oligosaccharides having a hydrophobic cavity such as cycloinulohexose, cycloinuloheptose, cycloinuloctose, calyxarenes, and cavitands.

The cyclodextrin and cyclodextrin derivatives useful in the method of the invention are limited only by the solubility of the cyclodextrin and cyclodextrin derivative selected under the particular polymerization conditions. Suitable cyclodextrins useful in the method of the present invention include, but are not limited to, α-cyclodextrin, β-cyclodextrin and δ-cyclodextrin. Suitable cyclodextrin derivatives useful in the method of the present invention include, but are not limited to, the methyl, triacetyl hydroxypropyl and hydroxyethyl derivatives of α-cyclodextrin, β-cyclodextrin and δ-cyclodextrin. The preferred cyclodextrin derivative is dimethyl-β-cyclodextrin.

The cyclic oligosaccharides having a hydrophobic cavity, such as cycloinulohexose, cycloinuloheptose, useful in the method of the invention are described by Takai et al. (*Journal of Organic Chemistry,* 1994, 59, 2967).

The calyxarenes useful in the method of the invention are described in U.S. Patent 4,699,966, International Patent Publication WO 89/08092 and Japanese patent publications 1988/197544 and 1989/007837.

The cavitands useful in the method of the invention are described in Italian application 22522 A/89 and Moran et al. (*Journal of the American Chemical Society,* 1982, 184, 5826).

The second step of the present invention is polymerizing in an aqueous system at least one monomer having low water solubility, from about 0.1% to about 100%, by weight of the monomer component, based on the total weight of the polymer, with at least one RAFT agent from about 0% to about 99.9% by weight, based on the total weight of the polymer.

The process of the invention can be applied to any monomer or monomer combinations which are susceptible to free-radical polymerization. Such monomers include those with the general structure:

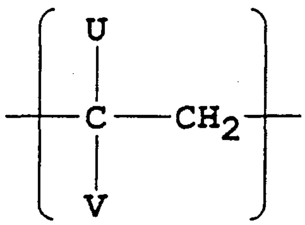

wherein:

- **U** is selected from the group consisting of hydrogen, halogen, optionally substituted $C_1$-$C_4$ alkyl wherein the substituents are independently selected from the group that consists of hydroxy, alkoxy, aryloxy (OR"), carboxy, acyloxy, aroyloxy ($O_2CR$"), alkoxy- carbonyl and aryloxycarbonyl ($CO_2R$");

- **V** is selected from the group consisting of hydrogen, R", $CO_2H$, $CO_2R$", COR", CN, $CONH_2$, CONHR", CONR"$_2$, $O_2CR$", OR" and halogen;

- **R"** is selected from the group consisting of optionally substituted $C_1$-$C_{18}$ alkyl, $C_2$-$C_{18}$ alkenyl, aryl, heterocyclyl, aralkyl, alkaryl wherein the substituents are independently selected from the group that consists of epoxy, hydroxy, alkoxy acyl, acyloxy, carboxy (and salts), sulfonic acid (and salts), alkoxy- or aryloxycarbonyl, isocyanato, cyano, silyl, halo, and dialkylamino.

Optionally, the monomers are selected from the group that consists of maleic anhydride, N-alkylmaleimide, N-arylmaleimide, dialkyl fumarate and cyclopolymerizable monomers. Monomers $CH_2$=CUV as used herein include acrylate and methacrylate esters, acrylic and methacrylic acid, styrene, acrylamide, methacrylamide, and methacrylonitrile, mixtures of these monomers, and mixtures of these monomers with other monomers. As one skilled in the art would recognize, the choice of comonomers is determined by their steric and electronic properties. The factors which determine copolymerizability of various monomers are well documented in the art. For example, see: Greenley, R.Z.. in *Polymer Handbook 3rd Edition,* Brandup, J., and Immergut, E.H Eds., Wiley: New York, 1989, p II/53.

Specific monomers or comonomers include the following: methyl methacrylate, ethyl methacrylate, propyl methacrylate (all isomers), butyl methacrylate (all isomers), 2-ethylhexyl methacrylate, isobomyl methacrylate, methacrylic acid, benzyl methacrylate, phenyl methacrylate, methacrylonitrile, alpha-methylstyrene, methyl acrylate, ethyl acrylate, propyl acrylate (all isomers), butyl acrylate (all isomers), 2-ethylhexyl acrylate, isobornyl acrylate, acrylic acid benzyl acrylate, phenyl acrylate, acrylonitrile styrene, functional methacrylates, acrylates and styrenes selected from glycidyl methacrylate, 2-hydroxyethyl methacrylate, hydroxypropyl methacrylate (all isomers), hydroxybutyl methacrylate (all isomers), N,N-dimethylaminoethyl methacrylate, N,N- diethylaminoethyl methacrylate, triethyleneglycol methacrylate, itaconic anhydride, itaconic acid, glycidyl acrylate, 2-hydroxyethyl acrylate, hydroxypropyl acrylate (all isomers), hydroxybutyl acrylate (all isomers), N,Ndimethylaminoethyl acrylate, N,N-dietbylaminoethyl acrylate, triethyleneglycol acrylate methacrylamide, N-methylacrylamide, N,N-dimethylacrylamide, N-tertbutylmethacrylamide, N-n-butylmethacrylamide, N-methylolmethacrylamide, Nethylolmethacrylamide. N-tert-butylacrylamide, N-n-butylacrylamide, Nmethylolacrylamide, N-ethylolacrylamide, vinyl benzoic acid (all isomers), diethylaminostyrene (all isomers), alpha-methylvinyl benzoic acid (all isomers), diethylamino alpha-methylstyrene (all isomers), p-vinylbenzene sulfonic acid, p-vinylbenzene sulfonic sodium salt, trimethoxysilyipropyl methacrylate, triethoxysilylpropyl methacrylate, tributoxysilylpropyl methacrylate, dimethoxymethylsilylpropyl methacrylate, diethoxymethylsilylpropylmethacrylate, dibutoxymethylsilylpropyl methacrylate, diisopropoxymethylsi lylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilyipropyl acrylate, triethoxysilylpropyl acrylate, tributoxysilylpropyl acrylate, dimethoxymethylsilylpropyl acrylate, diethoxymethylsi lylpropyl acrylate, dibutoxymethylsilylpropyl acrylate, diisopropoxymethvlsilylpropyl acrylate, dimethoxysilylpropyl acrylate, diethoxysilylpropyl acrylate, dibutoxysilyipropyl acrylate, diisopropoxysilylpropyl acrylate, vinyl acetate, vinyl butyrate, vinyl benzoate, vinyl chloride, vinyl fluoride, vinyl bromide, maleic anhydride, Nphenylmaleimide, N-butylmaleimide, N-vinylpyrrolidone, N-vinylcarbazole, butadiene, isoprene, chloroprene, ethylene, propylene.

The monomer moieties and value of n in the monomer repeating unit(s) in formulae (C) and (D) of Figure 2 are selected so that: when $n \geq 1$ and P is a single monomer species, then the polymer is homopolymer; when $n \geq 2$ and P is selected from 2 or more different monomer species in irregular sequence then the polymer is copolymer; and when $n \geq 2$ and P is selected from 2 or more different monomer species in which each different monomer or group of monomers appears in a discrete sequence then the polymer is block copolymer.

In the broadest sense, an emulsion polymerization is any heterogeneous polymerization in an aqueous environment. Typically, these systems produce particles of polymer as product. Those skilled in the art recognize many variants of these heterogeneous polymerizations, including conventional or ab-initio emulsions, seeded emulsions, mini emulsions, micro emulsions, suspensions and dispersions. These processes are generally distinguished by differences in process, components or results, with specific factors including the presence, amount and type of surfactant required; presence, amount and type of initiator; presence, type and amount of monomer, including monomer solubility; polymerization kinetics; temperature; order of addition of the components, including the timing of addition of the components (e.g., monomer); solubility of the polymeric product; agitation; presence of co-solvents; resulting particle size; particle stability in the polymerization system toward coagulation or sedimentation; and other factors known to those skilled in the art.

Typical result of the method of the invention is a controlled heterogeneous polymerization reaction in emulsion characterized by particle sizes ranging from 20 to 1000 nm, and preferably from 30 to 500 nm. Polymerizations of this embodiment may have process parameters similar to those discussed above for conventional emulsion polymerizations. These emulsions are stable (on the order of many months with no observed coagulation or sedimentation), yet are prepared using limited amounts of surfactant.

Polymerization conditions include a temperature in the range of from about 25 deg. C. to about 150 deg. C., preferably between about 35 deg. C. and about 110 deg. C., more preferably between about 50 deg. C. and about 100 deg. C., and most preferably between about 60 deg. C. and about 90 deg. C. Polymerization conditions also include a pressure between about ambient pressure up to about 100 atmospheres. Polymerization conditions also include the time for reaction, which may be from about 0.5 hours to about 72 hours, preferably in the range of from about 0.5 hour to about 24 hours, more preferably in the range of from about 1 hour to about 6 hours.

The distinguishing feature of an emulsion polymerization is the segregation of the radical polymer chains. Accordingly, the polymerization kinetics is generally regulated by the entry rate. When a radical enters a polymer particle, it has an average time $1/\rho$ to disposal for propagation, where $\rho$ represents the frequency of radical entry. This is much larger than in a bulk polymerization, where the time to disposal for propagation is instead regulated by the frequency of termination. As soon as a second radical enters the particle, an almost immediate bimolecular combination takes place, bringing the particle to a state with no active chain. As a result, the average number of active chains per particle approaches the value of 0.5, which is again much larger than in a homogeneous polymerization, independently by the value of $\rho$. These conditions are ideal for a living free radical polymerization (LFRP), where the reduction of the final number of dead chain is essential in order to keep the process close to true living conditions.

However, the method of the invention is not limited to situations where the so-called zero-one kinetics, i.e. average number of active chains per particle close to the value of 0.5, is approached. The average number of active chains per particle typically ranges from 0.0001 and 100, and it preferably ranges from 0.1 to 1.

In order to start the reaction, a source of radicals is necessary. The source of initiating radicals can be any suitable method of generating free radicals such as the thermally induced homolytic scission of a suitable compound (s) (thermal initiators such as peroxides, peroxyesters, or azo-compounds), spontaneous generation from monomer (e.g., styrene), redox initiating systems, photochemical initiating systems or high energy radiation such as electron beam, X- or gamma-radiation. The initiating system is chosen such that under the reaction conditions there is no substantial adverse interaction of the initiator or the initiating radicals with the RAFT agent under the conditions of the experiment. Thermal initiators are also chosen to have an appropriate half life at the temperature of polymerization. The initiator should also have the requisite solubility in the reaction medium or in the monomer mixture. Preferably, the initiator may start the production of radicals in the water phase.

Initiators can include one or more of the following compounds: hydrogen peroxide, potassium persulfate, ammonium persulfate, sodium persulfate and persulfate derivatives, ethyl 2-bromoisobutyrate, $\alpha,\alpha'$-azoisobutyronitrile, 4-4'-azobis(4-cyanopentanoic acid), $\alpha,\alpha'$-azodiisobutyramidine dihydrochloride and diazo derivatives, benzyl peroxide and peroxide derivatives. Redox initiators may be selected a compound from the group of iron(II) or titanium(III) catalysts; a bisulfite, including an alkali metal metabisulfite, hydrosulfite, and hyposulfite; sodium formaldehyde sulfonate; sodium formaldehyde sulfoxylate or from a reducing sugar such as ascorbic acid. Other suitable initiating systems are described in recent texts. See, for example, Moad and Solomon, *The Chemistry of Free Radical Polymerization,* Pergamon, London, 1995, pp 53-95.

The amount of initiator may be from 0.001% by weight to about 2% by weight of the monomer charged and in a redox system, a corresponding range of 0.001% by weight to about 2% by weight of reducing agent may be used.

In the method of invention, a surfactant may be required to stabilize the emulsion. Generally, surfactants are amphiphilic molecules comprising both a hydrophobic and a hydrophilic regions, which are capable of adsorbing to surfaces. Surfactants may be small molecules or polymers, micelle forming or non-micelle forming and may be anionic, cationic, zwitterionic or nonionic. It may be desirable to use mixtures of surfactants, for example to enhance particle stability or control particle formation. Surfactants can play an important role in determining particle size, particle distribution, particle formation and the stability of the resulting polymer emulsion, which are factors that those of skill in the art typically consider when choosing a surfactant for any specific embodiment. Typical amounts of surfactants range from about 0 to about 200% by weight relative to the monomer, with a more preferred range being from about 0 to about 5% by weight.

Suitable nonionic emulsifiers include, but are not limited to, ethoxylated octylphenols, ethoxylated nonylphenols, ethoxylated fatty alcohols and the like. Suitable anionic emulsifiers include, but are not limited to, sodium lauryl sulfate, sodium dodecylbenzene sulfonate, sulfated and ethoxylated derivatives of nonylphenols, octylphenols and fatty alcohols, esterified sulfosuccinates and the like. Suitable cationic emulsifiers include, but are not limited to, laurylpyridinium chlorides, cetyldimethyl amine acetate, ($C_8$-$C_{18}$) alkyldimethylbenzylammonium chlorides and the like.

Alternative surfactants include functional monomers, polymerizable surfactants and water-soluble surface-active polymers, including block copolymers, such as polyethyleneoxide-b-polypropyleneoxide-b-polyethyleneoxide (Pluronic(R)). Specific examples include polyvinyl alcohols, cellulose derivatives or vinylpyrrolidone-containing copolymers. A detailed description of further suitable protective colloids is given in Houben-Weyl, *Methoden der organischen Chemie,* Volume XIV/1, Makromolekulare Stoffe, Georg-Thieme-Verlag, Stuttgart, 1961, pages 411 to 420. Currently commercially available surfactants that are useful in this invention are listed below in Table 1.

Table 1

| Trade Name | Supplier | Contents |
|---|---|---|
| **Ionics** | | |
| Abex VA-50 | Rhodia | 46%; 1:1 mix of anionic and |
| Abex 2020 | Rhodia | ethoxylated octyl phenol Anionic/non-ionic mix (APE free), 30% |
| Abex 2030 | Rhodia | Anionic/non-ionic mix (APE free), 30% |
| Abex 18-S | Rhodia | Na Ether Sulfates; APE-free, 35% |
| Abex 12-S | Rhodia | Na Ether Sulfates; APE-free, 30% [(Bis-2-ethylhexyl)sodium |
| Aerosol OT | Sigma | sulfosuccinate, $C_{20}H_{37}O_7S{\cdot}Na$, $M_w$ 444.6, 10% [(Bis-2-ethylhexyl)sodium |
| Aerosol 22 | Sigma | sulfosuccinate, $C_{20}H_{37}O_7S{\cdot}Na$, $M_w$ 444.6, neat d = 1.12 |
| Atphos 3232 | ICI | Polyoxyethylene phosphate ester |
| Atphos 3226 | ICI | anionic sfac, phosphoric acid |
| Atphos 3202 | ICI | NonylPE n = 6, acid form, 100% |
| Calfax DB-45 | Pilot Chemical | $C_{12}$(branched) Sodium diphenyloxide disulfonate, 45% |
| Calfax 16L-35 | Pilot Chemical | $C_{16}$(linear) Sodium diphenyloxide disulfonate, 35% |
| Calimulse L-30 | Pilot Chemical | Sodium linear alkyl benzene sulfonate 30% |
| Calimulse EM-30 | Pilot Chemical | Sodium branched dodecyl benzene sulfonate 30% |
| Calsoft F-90 | Pilot | Sodium linear alkyl benzene |
| Dowfax C6L | Chemical Dow | sulfonate, solid, 90+% Disulfonated diphenyloxide with $C_6$ backbone |
| Dowfax C10L | Dow | Disulfonated diphenyloxide with $C_{10}$ backbone |
| Dowfax 8390 | Dow | Disulfonated diphenyloxide with $C_{16}$ backbone, 45% |
| Emulgator 825 | BASF | anionic/non-ionic mix |
| Emulgator 825-S | BASF | anionic/non-ionic mix |
| Rhodacal A-246/L | Rhodia | sodium alpha $C_{14}$-$C_{16}$ olefin sulfonate (38-41%) |

Table 1 (continued)

| Trade Name | Supplier | Contents |
|---|---|---|
| **Ionics** | | |
| Rhodacal DS-4 | Rhodia | sodium dodecyl benzene sulfonate |
| SDS | Aldrich | 23% sodium dodecyl sulfate |
| SDBS | Aldrich | sodium dodecyl benzene sulfonate 90% |
| Triton QS-30 | Union | 90%, gel like |
| Triton X-200 | Carbide Union Carbide | 28% aqueous dispersion |
| **Nonionics** | | |
| Abex 2545 | Rhodia | |
| Abex 2535 | Rhodia | |
| Dynol 604 | Air Products | Ethoxylated acetylenic diols, 100% |
| Igepal CO-210 | Aldrich | APE ($C_9H_{19}$-$C_6H_4$-$(OCH_2CH_2)_2OH$) 100% |
| Igepal CO-520 | Aldrich | APE ($C_9H_{19}$-$C_6H_4$-$(OCH_2CH_2)_5OH$) 100% |
| Igepal CA-897 | Rhodia | APE 40 (octylphenol ethoxylate) 70%, |
| Igepal CO-897 | Rhodia | APE (nonylphenol ethoxylate) 70% n = 40 |
| Pluronic F38 | BASF | EO-PO-EO block, average $M_w$ 4700 HLB 31 |
| Pluronic F98 | BASF | EO -PO-EO block, average $M_w$ 13K, HLB 28 |
| Pluronic P65 | BASF | EO-PO-EO block, average $M_w$ 3400 HLB 17 50% in isopropyl alcohol, 50% |
| Surfynol 104 PA | Air Products | 2,4,7,9-tetramethyl-5-decyne-4,7,- diol 50% in propylene glycol, 50% |
| Surfynol 104 PG-50 | Air Products | 2,4,7,9-tetramethyl-5-decyne-4,7,- diol |
| Surfynol DF-58 | Air Products | silicone-based |
| Surfynol 440 | Air Products | Surfynol 104 with ethylene oxide chains, more hydrophilic, 100% |
| Surfynol 465 | Air Products | Surfynol 104 with ethylene oxide chains, more hydrophobic, 100% |
| Triton X-100 | Union Carbide | t-octylphenoxy-polyethoxyethanol (n = 9.5), 100% |
| Triton X-405 | Union Carbide | t-octylphenoxy-polyethoxyethanol, 70% |

The process does not necessarily need surfactants. It is well known that cyclodextrins can impart enough colloidal stability to the emulsion. In this case, it is expected also a different nucleation mechanism of the swollen latex particles and, in particular, this results in larger particles (e.g., 200 to 800 nm).

While not whishing to be limited to any particular mechanism, it is believed that the basic principle of LFRP consists in introducing in the reacting system a species able to reversibly trap the propagating, or active, or radical polymer chains into a reversible non-propagating specie, or dormant polymer chain. The presence of these dormant polymer chains forces every chain to undergo through a series of regularly alternating periods where the chain is either active or dormant. During each active period, the chain has the possibility of adding only a limited number of monomer units before being trapped again. Accordingly, a fast exchange between active and dormant state is essential in order to guarantee a similar rate of monomer addition for every chain along the entire process. If, at the same time, the probability of termination is somehow reduced so that the final number of dead chains is negligible with respect to the dormant, the polymer chains can live during the whole process and grow with a remarkable uniformity in the chain length.

Among the different mechanism by which a LFRP can be carried out, LFRP by reversible addition-fragmentation transfer (RAFT) reaction is the one that best exploits. In LFRP by RAFT, the species responsible to trap the growing chain is represented by a group, as shown in Figure 2, which could be e.g. a dithio-ester group if the elements, designated with the letter E' and E" are sulfurs (S). In this case, the general kinetics of the RAFT reaction is believe to be represented by the kinetic mechanism of Figure 1, where the group X-CS-S- represents the trapping group, and $P_n^\bullet$ and $P_m^\bullet$ generic radical polymer chains with n and m monomer units, respectively. The propagating radical $P_m^\bullet$ can react reversibly with the trapping group of the dormant polymer chain to form an intermediate radical, $P_n$-S-CX$^\bullet$-S-$P_m$, which fragments to give either the starting reactants or a polymer radical chain $P_n^\bullet$ (which adds monomer to reinitiate polymerization) and a new dormant chain X-CS-S-$P_n$. The trapping group bonded to the new chain has similar reactivity

as the original trapping group and can restart the same process. As a result of the mechanism, the active chain concentration in the system is not affected by the RAFT reaction.

Under these conditions, molecular weight increases in a predictable and linear manner with conversion and it is controlled by the stoichiometry. In the case of monofunctional RAFT agents of Formulae A and B (see Figure 2) the molecular weight of the product can be calculated according to the relationship:

$$MW_{prod} = \frac{[\text{moles of monomer consumed}]}{[\text{moles of RAFT agent}]} \cdot MW_{mon} + MW_{TA}$$

where $MW_{prod}$ is the number average molecular weight of the isolated polymer; $MW_{mon}$ the molecular weight of the monomer; and $MW_{RA}$ is the molecular weight of the RAFT agent of formula A or B. This expression applies under reaction conditions where the number of initiator-derived chains is small with respect to total chains. Note that this form of molecular weight control is very different to that seen in free radical polymerization in the presence of conventional transfer agents.

The choice of the RAFT agent is important in the method of the invention. The preferred RAFT agents give chain transfer with high chain transfer constants, $C_{tr}$. The transfer constant is defined as the ratio of the rate constant for chain transfer ($k_{ex}$) to the rate constant for propagation at zero conversion of monomer ($k_p$), i.e. $C_{tr} = k_{ex}/k_p$. If chain transfer occurs by addition-fragmentation, the rate constant for chain transfer ($k_{ex}$) is defined as follows:

$$k_{ex} = k_{add} \frac{k_\beta}{k_\beta + K_{-add}}$$

where $k_{add}$ is the rate constant for addition to the RAFT agent; and $k_{-add}$ and $k_\beta$ the rate constants for fragmentation in the reverse and forward directions respectively. Preferably, the transfer constant for the addition-fragmentation chain transfer process is greater than 0.1. The polydispersity obtained under a given set of reaction conditions is sensitive to the value of the transfer constant. Müller et al. (*Macromolecules,* 1995, 28, 4326) have derived relationships which enable polydispersities to be estimated for polymerizations which involve chain equilibration by reversible chain transfer:

$$P_d = \frac{M_w}{M_n} = 1 + \frac{1}{C_{tr}}$$

This above relationship should apply to batch polymerizations carried to full conversion in the situation where the number of initiator-radical derived chains is small with respect to total chains and there are no side reactions. Lower polydispersity values will result from the use of reagents with higher transfer constants. In particular, this relationship suggests that the transfer constant should be > 2 to obtain a polydispersity < 1.5 in a batch polymerization. Higher transfer constants also allow greater flexibility in the choice of reaction conditions. If the transfer constant is < 2, low polydispersities (< 1.5) may still be obtained in feed polymerization processes by choosing an appropriate monomer to transfer agent ratio and continuing the polymerization for a sufficient period to produce the desired molecular weight and polydispersity. In these circumstances, kinetic simulation can be used to aid in selecting reaction conditions.

As used herein, the term RAFT agent is referred to a compound containing a trapping group and that is added to the emulsion mixture and able to start the living polymerization according to the RAFT mechanism. The term "RAFT agent" describes a generic compound selected from formula (A), (B), (C) and (D), as reported in Figure 2, wherein:

- **E'** is preferably, but it is not limited to, a sulphur element; optionally other elements of class 6 of the Periodic Table of the elements, such as oxygen, selenium, etc. may be suitable to form the RAFT agent and their use in the method of invention is limited only by their ability to mimic sulphur behavior; optionally groups such as $CH_2$, CHR and NH may be suitable to represent the element E' in Figure 2;

- **E"** is preferably equal to E'; optionally E" is a different element or group selected from those listed for E';

- **Z'** is selected from the group consisting of hydrogen, chlorine, optionally substituted alkyl, optionally substituted aryl, optionally substituted heterocyclyl, optionally substituted alkylthio, optionally substituted alkoxycarbonyl, optionally substituted aryloxycarbonyl (-COOR"), carboxy (-COOH), optionally substituted acyloxy ($-O_2CR"$), optionally substituted carbamoyl ($-CONR"_2$), cyano (-CN), dialkyl- or diaryl- phosphonato [$-P(=O)OR"_2$], optionally substituted [$-NR"-NR"_2$] groups, dialkyl- or diaryl-phosphinato [$-P(=O)R"_2$], and a polymer chain formed by any mechanism;

- **Z''** is a q-valent moiety derived from a member of the group consisting of optionally substituted alkyl, optionally substituted aryl and a polymer chain; where the connecting moieties are selected from the group that consists of aliphatic carbon, aromatic carbon, and sulfur;

- **P** is selected from the group consisting of

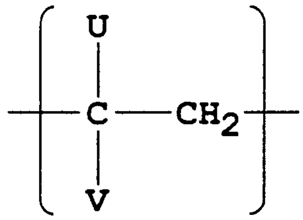

where U and V are as defined above, and from repeating units from maleic anhydride, N-alkylmaleirnide, N-arylmaleimide, dialkyl fumarate and cyclopolymerizable monomers;

- **R** is selected from the group consisting of optionally substituted alkyl, optionally substituted saturated, unsaturated or aromatic carbocyclic or heterocyclic ring; optionally substituted alkylthio; optionally substituted alkoxy; optionally substituted dialkylamino; an organometallic species; and a polymer chain prepared by any polymerization mechanism;

- **n** is 1 or an integer greater than 1; typically n ranges from 1 to 1,000, more typically from 1 to 100, even more typically from 1 to 10;

- **p** is 1 or an integer greater than 1; when $p \geq 2$, then R=R';

- **q** is an integer $\geq 2$;

- **R'** is a p-valent moiety derived from a member of the group consisting of optionally substituted alkyl; optionally substituted aryl and a polymer chain; where the connecting moieties are selected from the group consisting of aliphatic carbon, aromatic carbon, silicon, and sulfur; and

- **R''** is as defined above.

Cyclopolymerizable monomers are compounds which contain two or more unsaturated linkages suitably disposed to allow propagation by a sequence of intramolecular and intermolecular addition steps leading the incorporation of cyclic units into the polymer backbone. Most compounds of this class are 1,6-dienes such as diallylammonium salts (e.g., diallyldimethylarnmonium chloride), substituted 1,6-heptadienes (e.g., 6-dicyano-1,6-heptadiene,2,4,4,6-tetrakis (ethoxycarbonyl)-1,6-heptadiene) and monomers of the generic structure

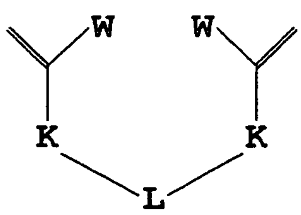

where substituents K, K', L, W, W' are chosen such that the monomer undergoes cyclopolymerization. For example: W, W' are independently selected from the group consisting of H, $CH_3$, CN, $CO_2$Alkyl, Ph; K, K' are selected from the group consisting of $CH_2$, C=O, $Si(CH_3)_2$, O; L is selected from the group consisting of $C(W)_2$, O, $N(Alkyl)_2$ salts, P $(Alkyl)_2$ salts, P(O)Alkyl. For a further list of monomers see Moad and Solomon, *The Chemistry of Free Radical Po-*

*lymerization,* Pergamon, London, 1995, pp 169-170.

By polymer chains formed by any mechanism (in Z', Z", R, R' or R"), is meant: condensation polymers such as polyesters (for example, polycaprolactone, polyethylene terephthalate), polycarbonates, poly(alkylene oxide)s [for example, poly(ethylene oxide), poly(tetramethylene oxide)], nylons, polyurethanes and chain polymers such as poly (meth)acrylates and polystyrenics.

By organometallic species is meant a moiety containing one or more metal atoms from Groups III and IV of the Periodic Table of the elements and transition elements and organic ligands, preferably species such as $Si(X)_3$, Ge $(X)_3$ and $Sn(X)_3$ which can be good radical leaving groups and initiate polymerization.

Optionally, after the polymerization is over (e.g., completed or terminated) the dithio-moiety of the RAFT agent can be cleaved by chemical or thermal ways, if one wants to reduce the sulfur content of the polymer and prevent any problems associated with presence of the control agents chain ends, such as odor or discoloration. Typical chemical treatment includes the catalytic or stoichiometric addition of base such as sodium hydroxide, a primary amine, acid or anhydride, or oxidizing agents such as hypochlorite salts.

In the method of invention, the preferred RAFT agent has a sulfur element as E' and E" groups, i.e. it belongs to the class of dithio-esters. Moreover, it has a very low solubility in water, and in general a lower solubility than the monomer.

According to the kinetic mechanism of the RAFT reaction as it is depicted in Figure 2, the radical concentration does not change as a consequence of the living process. Accordingly, once the method of the invention is applied to emulsion, the same kinetics as a conventional emulsion polymerization, i.e. a non-living polymerization, is obtained. Moreover, the effective rate of transfer, $k_{ex}$, provides a totally independent parameter to be tuned in order to make the exchange between the active and the dormant state faster and, thus, to better homogenize the growth of the polymer chains. Finally, the initial monomer to dormant chain molar ratio returns the average number of monomer units added by each chain, thus providing an additional parameter to control the polymerization.

Summarizing, the polymerization can be fully controlled acting on four different independent parameters: the particle size, the frequency of entry, the exchange reaction rate of the RAFT reaction and the initial monomer to dormant chain ratio. The particle size affects the polymerization rate, since the active chain concentration in particle is $\bar{i}/N_A V_p$, where $\bar{i}$ represents the average number of active chains in particle, $N_A$ the Avogadro's constant and $V_p$ the particle volume. The frequency of entry affects the final number of dead chains by bimolecular combination. Accordingly, to minimize the dead chains is necessary to reduce the frequency of radical entry from the water phase and to increase the polymerization rate, thus decreasing $V_p$. The exchange reaction rate of the RAFT reaction affects the final polydispersity of the process. The faster is the exchange between active and dormant chain, the large is the number of active periods each chain experiences, thus leading to a better uniformity of the final molecular weight distribution. Finally, the initial number of dormant chains added to the system controls the final average degree of polymerization. The same applies when producing a copolymer.

Since the dormant chains at the end of the polymerization are still bonded to the trapping molecule, if another monomer is dissolved into the particles, the reaction simply restarts and a block copolymer is formed. The ratio between the moles of dormant chains in the system and the moles of monomer added returns the average degree of polymerization of the second block of the copolymer. As used herein, "block copolymer" refers to a polymer comprising at least two segments of differing composition, having any one of a number of different architectures. Although there may be three, four or more monomers in a single block-type polymer architecture, it will still be referred to herein as a block copolymer. Block copolymer may have an A-B architecture (with "A" and "B" representing the monomers). Other architectures included within the definition of block copolymer include A-B-A, A-B-A-B, A-B-C, A-B-C-A, A-B-C-A-B, A-B-C-B, A-B-A-C (with "C" representing a third monomer), and other combinations that will be obvious to those of skill in the art.

The invention has wide applicability in the field of free radical polymerization and can be used to produce polymers and compositions for e.g. coatings, including paints, wood coatings, inks; paper coatings; textile and nonwoven binders and finishes; adhesives; mastics; floor polishes; leather coatings; plastics; plastic additives; petroleum additives and the like. Additional applications for polymers of the invention are in the fields of imaging, electronics (e.g., photoresists), engineering plastics, adhesives, dispersants, sealants, and polymers in general.

Block copolymers allow the combination of potentially diverse polymer properties (such as hard/soft and/or hydrophilic/hydrophobic (amphiphilic) blocks) into a single polymer chain. Hard/soft block copolymers combine segments with significantly different glass transition temperatures Tg. A typical hard/soft copolymer pairs a relatively "hard" block (e.g., styrene) with a relatively "soft" block (e.g., butyl acrylate). The resulting materials can possess performance attributes not found in any of the constituent segments. The presence of microphase separation and various phase morphologies in block copolymers is associated with unique performance attributes of many block copolymers. For example, by combining the stiffness or rigidity characteristic of hard materials with the compliance of soft materials, block copolymers may exhibit advantageous properties, such as processability under melt conditions, elasticity, resistance to abrasion and cracking and desired creep characteristics (corresponding to the material's ability to hold its

shape under external stresses) depending on morphology, making them appropriate for use as extrudable bulk materials, coatings and separation media. The exact properties of a hard/soft copolymer depend significantly on the difference between the glass transition temperatures of the constituent blocks; accordingly, selection of monomers having glass transition temperatures a particular distance apart can lead to hard/soft block copolymers having particular desired characteristics. Thus, while for one application it may be appropriate to combine blocks having glass transition temperatures that differ by, for example, 20 deg. C., the choice of Tg (and therefore of materials) depends on the application.
Likewise, the amphiphilic block copolymers may display combinations of hydrophobic and hydrophilic properties that make such materials appropriate for use as surfactants or dispersants, scavengers, surface treatments and the like. Different block sizes over all ratios of monomers and molecular weights lead to families of novel compounds, for example thermoplastics, elastomers, adhesives, and polymeric micelles.

Multi-arm or star polymers can be generated using initiators capable of initiating multiple free radical polymerizations under the controlled conditions of the invention. Such initiators include, for example polyfunctional control agents, discussed above. Following initiation, the growth of each arm is controlled by the same living kinetics described for linear polymers, making it possible to assemble star polymers whose arms include individual homopolymers as well as di, tri or higher order block copolymers. Alternatively, multi-arm polymers are formed by growing end-functionalized oligomers or polymers followed by the addition of a cross-linking monomer such as ethylene glycol diacrylate, divinyl benzene, methylene bisacrylamide, trimetylol propane triacrylate, etc. The small hydrodynamic volume of star polymers produced according to these methods provides properties such as low viscosity, high Mw, and high functionality useful in applications such as rheology control, thermosets, and separation media. Similarly, the inclusion of branched or multiple ethylenically unsaturated monomers enables the preparation of graft polymers, again exhibiting the living kinetics characteristic of this invention.

In the following, few examples of miniemulsion LFRP by RAFT are shown. These examples are proposed in order to demonstrate that by using miniemulsion together with dormant chains to start the RAFT reaction it is possible to obtain different homo-polymers and copolymers with polymerization rates comparable to those of a classical emulsion process.

Example no. 1: Synthesis of the RAFT agent

RAFT agent is given according to the following chemical formula:

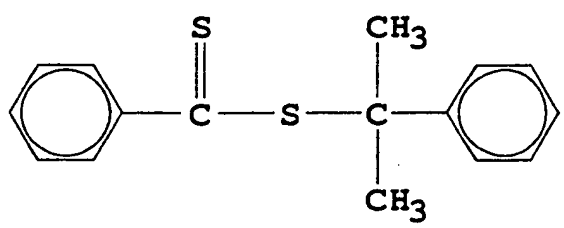

which corresponds to Formula (B) of Figure 2, where q=1, E'=E"=S, Z"=$C_6H_5$ and R=$C(CH_3)_2C_6H_5$. This transfer agent has been synthesized according to the following two-step procedure:

- 1st step of reaction: Magnesium and 80 ml of THF were put in a 250 ml threenecked roundflask with cooler and the mixture was heated to reflux. Bromobenzene in 40 ml of THF was added dropwise for about 40 minutes and left under reflux for one more hour. Carbon disulfide was added dropwise. The heating was turned off and the mixture was stirred for 2 more hours. 400 ml 1N of HCl was added to the mixture. The product was extracted with diethyl ether, washed with water and dried over $MgSO_4$.

- 2nd step of reaction: The product was put in a 250 ml 3-necked round flask with 50 ml of $CCl_4$. Isopropenyl benzene with 30 ml of $CCl_4$ was added dropwise. The mixture was heated to 70° C for 4 hours and the raw product obtained by solvent evaporation. This product was purified by column chromatography (Silica Gel 60, toluene:hexane = 1:20), to obtain the RAFT agent in pure form.

Example no. 2: methyl methacrylate (MMA) emulsion LFRP by RAFT in the presence of cyclodextrins

The reaction has been prepared according to the following recipe:

- Monomer 9.0 g
- RAFT agent 0.0785 g
- Water 143.8 g
- Surfactant 0.824 g
- Initiator 0.103 g
- Cyclodextrin 2.54 g

Water has been doubly distilled prior the use. Cyclodextrin (Heptakis(2,6-di-O-methyl)-b-cyclodextrin, Aldrich), RAFT agent (see Example 1) and surfactant (sodium dodecyl sulfate, Fluka) were added to water. The system was purged with nitrogen and the temperature has been raised to 70 deg C and left under vigorous agitation for 30 minutes. Via syringe, first the monomer (methyl methacrylate, Fluka) and immediately after a solution with the initiator (Potassium peroxodisulfate, Fluka, in 9 grams of water) have been added to the reaction vessel. Reaction temperature was controlled and kept within 1 deg. C around the set temperature (70 deg. C).

In this example, as well as in the following, conversion is evaluated gravimetrically. Particle size distribution (PSD) is measured by small-angle static laser light scattering (Malvern Mastersizer 2000). Molecular weight distribution (MWD) data are measured by a GPC apparatus equipped with 3 columns (Polymer Laboratories, Plgel 5μ Mixed-C). Tetrahydrofuran (1 ml/min at 40°C) is used as eluent. Samples were taken by means of a syringe and directly used for every measurement (conversion, MWD and PSD).

After 3 hours the polymerization was stopped and, as shown in Figure 3a, the system reached complete conversion. As shown in Figure 3b, the average molecular weight increased almost linearly and the polydispersity value of the polymer was always controlled (below 1.9), while the final polymer had a polydispersity value of the MWD below 1.4. In Figure 4, the MWD (normalized upon conversion) measured at different conversion values is reported, thus confirming the living nature of the process. It is worth noting that no polymer with large molecular weight was detected, i.e. polymer having the typical dimension range of a non-living emulsion polymerization.

<u>Example no. 3</u>: MMA emulsion LFRP by RAFT in the presence of cyclodextrins under semi-batch conditions

The reaction has been prepared according to the procedure described in Example no. 2, using the following recipe:

- Monomer 10.3 g
- RAFT agent 0.0695 g
- Water 150.1 g
- Surfactant 0.289 g
- Initiator 0.0666 g
- Cyclodextrin 2.33 g

Reaction temperature was kept at 70 deg C. After 75 minutes from the initiator injection, conversion was 48% and 9.82 g of MMA were added by syringe. After about 126 minutes, conversion was almost complete (96%), and 5.05 g of MMA were added. After 170 minutes, conversion was again complete. In Figure 5, the evolution of the MWD is reported (MWD are normalized upon conversion) together with the average molecular weight and polydispersity of the MWD, confirming the living nature of the reaction despite the quite large polydispersity values of the MWD. In Figure 6, a SEM picture of the final latex is shown, confirming that the latex is quite monomodal, as measured by light scattering (average particle size, 168 nm, polydispersity of the PSD, 1.05).

<u>Example no. 4</u>: methyl methacrylate (MMA) - styrene (STY) block copolymerization by RAFT emulsion LFRP in the presence of cyclodextrins

The reaction has been prepared according to the procedure described in Example no. 2, using the following recipe:

- Monomer 8.6 g
- RAFT agent 0.0791 g
- Water 150.3 g
- Surfactant 0.821 g
- Initiator 0.103 g
- Cyclodextrin 2.57 g

Reaction temperature was kept at 70 deg C. After 70 minutes from the initiator injection, the reaction was complete. Other 5.0 g of MMA were injected by syringe, followed by 3.5g of STY after about 2 hours. In Figure 7, the MWD traces (normalized to the same area) as detected by GPC are reported. It is evident that the polymer is growing in a living way. After the first stage (i.e., just before the second addition of MMA), the polymer showed an average molecular weight of 29000 g/mol and a polydispersity value of the MWD of 1.41. After the second stage (i.e., just before the addition of STY), the polymer showed an average molecular weight of 70700 g/mol and a polydispersity of 1.62. At the end of the polymerization, the final molecular weight was 101600 g/mol and the polydispersity 2.05.

Example no. 5: STY homopolymerization by RAFT emulsion LFRP in the presence of cyclodextrins

The reaction has been prepared according to the procedure described in Example no. 2, using the following recipe:

- Monomer 10.0 g
- RAFT agent 0.0650 g
- Water 150.3 g
- Surfactant 0.592 g
- Initiator 0.192 g
- Cyclodextrin 2.25 g

Reaction temperature was kept at 70 deg C. The conversion with time plot is reported in Figure 8a, while the corresponding evolution of average MW and polydispersity of the MWD is shown in Figure 8b. In spite of the large polydispersity values, the continuous increase of the average MW and the corresponding decrease in polydispersity is a proof of the livingness of the system. After 80 minutes of reaction, other 9.9 g of STY were added to the system. After 85 minutes the reaction was complete and the average MW increased to 64200 g/mol, while the polydispersity remained large (about 3.93). The final average particle size as detected by LS was 114 nm, with a polydispersity value of the PSD of 1.17.

While the invention has been described in connection with a preferred embodiment, it is not intended to limit the scope of the invention to the particular form set forth, but on the contrary, it is intended to cover such alternatives, modifications, and equivalents as may be included within the spirit and scope of the invention as defined by the appended claims.

## Claims

1. Method for forming in a preferably aqueous system a polymer containing, as polymerized units, at least one monomer, and comprising the steps of:

   (a) complexing at least one so-called RAFT agent, able to undergo to reversible addition-fragmentation transfer (RAFT) reaction with a phase transfer agent able to form a complex with the RAFT agent and to solubilize it in water; and

   (b) polymerizing from about 0.1% to 100% by weight of the said monomer, based on the total weight of the polymer, in a preferably aqueous system in the presence of free radicals produced from a free radical source, and for a time sufficient to form the polymer.

2. Method according to claim 1, **characterized in that** the polymerization according to the RAFT reaction is started by using a RAFT agent which is selected from at least one compound according to the following general formulae:

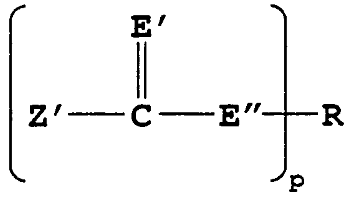

and/or

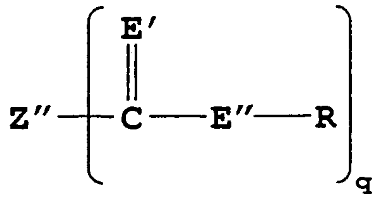

wherein

**E'** is selected from sulphur, any other element of class 6 of the Periodic Table of the elements, as e.g. oxygen or selenium, which are able to mimic sulphur behavior, or groups such as $CH_2$, CHR or NH;

**E"** is equal to E', or is selected from the same group of elements or compounds as E';

**Z'** is selected from the group consisting of hydrogen, chlorine, substituted alkyl, substituted aryl, substituted heterocyclyl, substituted alkylthio, substituted alkoxycarbonyl, substituted aryloxycarbonyl (-COOR"), carboxy (-COOH), substituted acyloxy ($-O_2CR"$), substituted carbamoyl ($-CONR"_2$), cyano (-CN), dialkyl- or diarylphosphonato [$-P(=O)OR"_2$], substituted [$-NR"-NR"_2$] groups, dialkyl- or diaryl-phosphinato [$-P(=O)R"_2$], or a polymer chain formed by any mechanism;

**Z"** is a q-valent moiety derived from a member of the group consisting of substituted alkyl, substituted aryl or a polymer chain; where the connecting moieties are selected from the group that consists of aliphatic carbon, aromatic carbon, and sulfur;

**R** is selected from the group consisting of optionally substituted alkyl, substituted saturated, unsaturated or aromatic carbocyclic or heterocyclic ring; substituted alkylthio; substituted alkoxy; substituted dialkylamino; an organometallic species; or a polymer chain prepared by any polymerization mechanism;

**R"** is selected from the group consisting of substituted $C_1$-$C_{18}$ alkyl, $C_2$-$C_{18}$ alkenyl, aryl, heterocyclyl, aralkyl, alkaryl wherein the substituents are independently selected from the group that consists of epoxy, hydroxy, alkoxy acyl, acyloxy, carboxy (and salts), sulfonic acid (and salts), alkoxy- or aryloxycarbonyl, isocyanato, cyano, silyl, halo, and dialkylamino.

**p** is 1 or an integer greater than 1; when $p \geq 2$, then R=R';

**q** is an integer $\geq 2$;

**R'** is a p-valent moiety derived from a member of the group consisting of substituted alkyl; substituted aryl or a polymer chain; where the connecting moieties are selected from the group consisting of aliphatic carbon, aromatic carbon, silicon, and sulfur.

3. Method according to claim 1 or 2, **characterized in that** the RAFT agent can generate in the presence of radicals and at least one monomer a living free radical polymerization according to the reversible addition-fragmentation transfer reaction (RAFT) mechanism.

4. Method according to one of the claims 1 to 3, **characterized in that** the RAFT agent has very low water solubility and can be partitioned between the aqueous and the non-aqueous phases.

5. Method according to one of the claims 1 to 4, **characterized in that** the RAFT agent can form preferably a water soluble complex with a phase transfer agent.

6. Method according to one of the claims 1 to 5, **characterized in that** the phase transfer agent may be selected from the group consisting of cyclodextrin, all the cyclodextrin derivative, cycloinulohexose, cycloinuloheptose, cycloinuloctose, calyxarenes, and cavitands.

7. Method according to one of the claims 1 to 6, **characterized in that** the phase transfer agent is a cyclodextrin selected from the group consisting of α-cyclodextrin, β-cyclodextrin, γ-cyclodextrin.

8. Method according to one of the claims 1 to 7, **characterized in that** the phase transfer agent is a cyclodextrin derivative selected from the group consisting of the methyl, triacetyl, hydroxypropyl, and hydroxyethyl derivatives of α-cyclodextrin, β-cyclodextrin, γ-cyclodextrin.

9. Method according to one of the claims 1 to 8, **characterized in that** the phase transfer agent is a randomly methylated β-cyclodextrin or methyl-β-cyclodextrin or dimethyl-β-cyclodextrin.

**10.** Method according to one of the claims 1 to 9, **characterized in that** the monomer can be selected from any monomers or monomer combinations which are susceptible to free-radical polymerization.

**11.** Method according to one of the claims 1 to 10, **characterized in that** the at least one monomer to be polymerized includes those with the general structure:

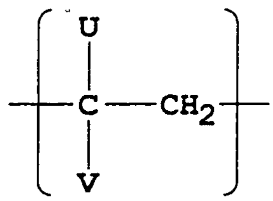

wherein:

**U** is selected from the group consisting of hydrogen, halogen, substituted $C_1$-$C_4$ alkyl wherein the substituents are independently selected from the group that consists of hydroxy, alkoxy, aryloxy (OR"), carboxy, acyloxy, aroyloxy ($O_2CR"$), alkoxycarbonyl and aryloxy-carbonyl ($CO_2R"$);

**V** is selected from the group consisting of hydrogen, R", $CO_2H$, $CO_2R"$, COR", CN, $CONH_2$, CONHR", $CONR"_2$, $O_2CR"$, OR" and halogen;

**R"** is selected from the group consisting of substituted $C_1$-$C_{18}$ alkyl, $C_2$-$C_{18}$ alkenyl, aryl, heterocyclyl, aralkyl, alkaryl wherein the substituents are independently selected from the group that consists of epoxy, hydroxy, alkoxy acyl, acyloxy, carboxy (and salts), sulfonic acid (and salts), alkoxy- or aryloxycarbonyl, isocyanato, cyano, silyl, halo, and dialkylamino.

**12.** Method according to one of the claims 1 to 11, **characterized in that** the at least one monomer or the monomers are selected from the group that consists of maleic anhydride, N-alkylmaleimide, N-arylmaleimide, dialkyl fumarate, cyclopolymerizable monomers, styrene, alpha-methylstyrene, vinyl benzoic acid (all isomers), p-vinylbenzene sulfonic acid, p-vinylbenzene sulfonic sodium salt and styrene derivatives, methyl methacrylate, ethyl methacrylate, butyl methacrylate (all isomers), benzyl methacrylate and other methacrylate derivatives, methyl acrylate, ethyl acrylate, butyl acrylate (all isomers), benzyl acrylate and other acrylate derivatives, vinyl acetate, acrylonitrile and acrylonitrile derivatives, acrylic acid and acrylic acid derivatives, ethylene oxide, butadiene, ethylene, propylene, n-bytylene, i-butylene, pentene and alchene derivatives, acrylamide, methacrylamide, and methacrylonitrile, mixtures of these monomers, and mixtures of these monomers with other monomers.

**13.** Method according to one of the claims 1 to 12, **characterized in that** the polymerization according to the RAFT reaction is started by using at least one compound according to the following general formulae:

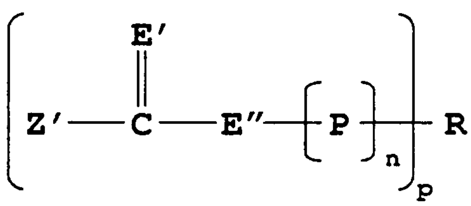

and/or

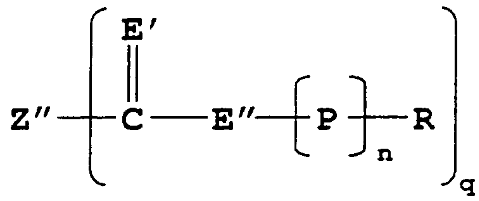

wherein
**P** is selected from the group consisting of

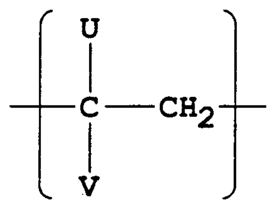

and from repeating units from maleic anhydride, N-alkylmaleirnide, N-arylmaleimide, dialkyl fumarate and cyclopolymerizable monomers; and
**n** is 1 or an integer greater than 1.

**14.** Method according to one of the claims 1 to 13, **characterized in that** said polymerization conditions comprise pseudo-living kinetics, i.e. where most of the polymer chains have a life time similar to the process time and can restart growing at any time of the process if put in contact with monomer.

**15.** Method according to one of the claims 1 to 14, **characterized in that** the source of radicals may be comprised of thermally induced homolytic scission of a suitable compound(s), spontaneous generation from monomer, redox initiating systems, photochemical initiating systems.

**16.** Method according to one of the claims 1 to 15, **characterized in that** said polymerization conditions comprise a temperature in the range from 20 DEG C to about 130 DEG C.

**17.** Method according to one of the claims 1 to 16, **characterized in that** said polymerization conditions further include one or more surfactants selected from the group consisting of anionic, cationic or non-ionic surfactants, and any mixture of these surfactants.

**18.** Method according to one of the claims 1 to 17, **characterized in that** said polymerization conditions further comprise a chemical buffer, such as e.g. sodium bicarbonate.

**19.** Method according to one of the claims 1 to 18, further comprising sequential or simultaneous addition of one monomer or more monomers to said polymerization mixture so to produce block copolymers.

**20.** Method according to one of the claims 1 to 19, further comprising the continuous or semi-continuous addition of reagents to said polymerization mixture, wherein said addition of reagent comprises addition of one or more monomers, surfactant, radical initiator, RAFT agent, phase transfer agent and combinations thereof.

**21.** Use of the method according to one of the claims 1 to 20 for the production of polymer in an emulsion.

**22.** Use of the method according to one of the claims 1 to 21 for the production of polymer, wherein said polymer is selected from the group of homo-polymers and/or random, alternating, gradient and block copolymers.

**23.** Use of the method according to one of the claims 1 to 22 for the production of polymer, wherein said polymer has very homogeneous characteristics, e.g. being very homogeneous in terms of chain length and/or being very homogeneous in terms of chemical composition and/or being very homogeneous in terms of monomer sequences and/or being very homogeneous in terms of homogeneous chain length distribution.

**24.** Use of the method according to one of the claims 1 to 23 for the production of polymer, wherein said polymer is a structured polymer, e.g. star or grafted.

**25.** Use of the method according to one of the claims 1 to 24 for the production of polymer, wherein said polymer has well defined end group functionalities.

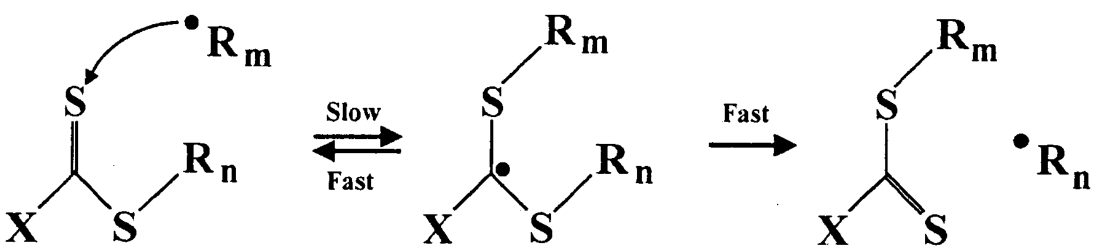


Figure 1

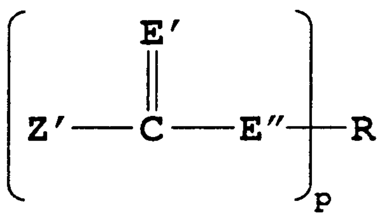

(A)

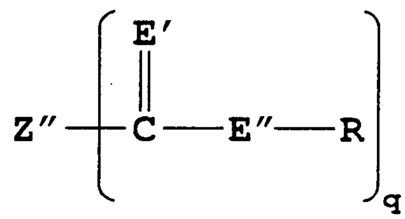

(B)

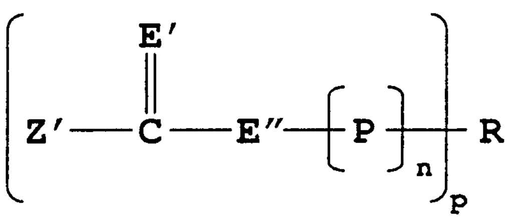

(C)

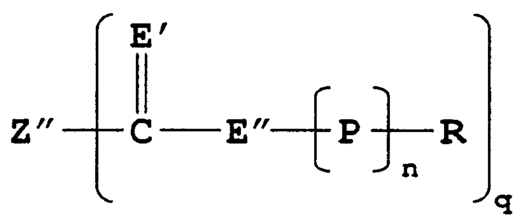

(D)

Figure 2

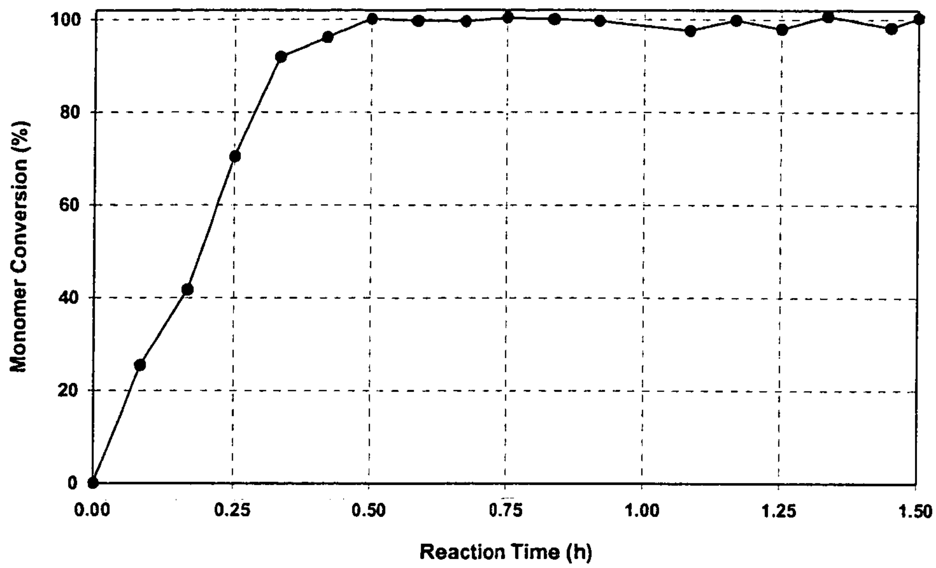
100
80
60
40
20
0
Monomer Conversion (%)
0.00
0.25
0.50
0.75
1.00
1.25
1.50
Reaction Time (h)

(A)

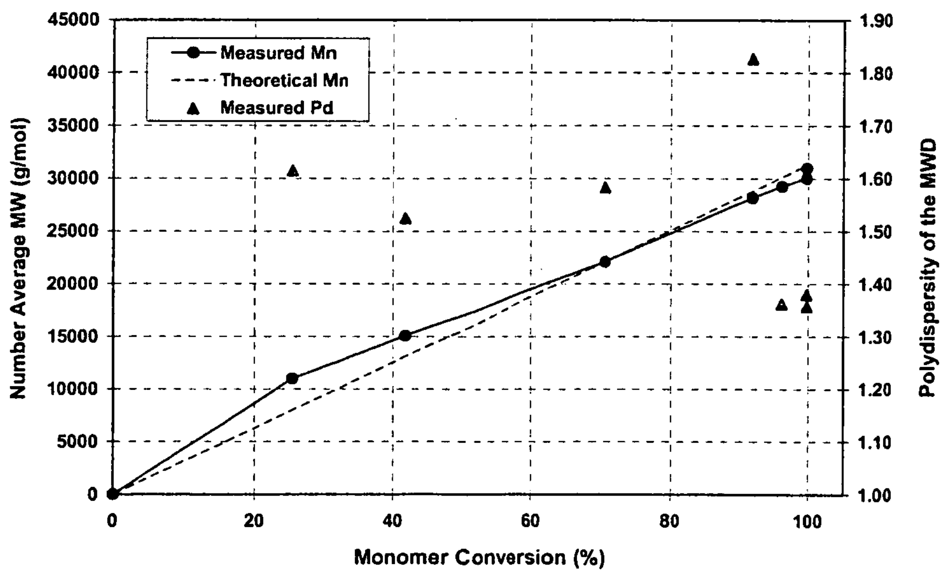
Measured Mn
Theoretical Mn
Measured Pd
45000
40000
35000
30000
25000
20000
15000
10000
5000
0
Number Average MW (g/mol)
1.90
1.80
1.70
1.60
1.50
1.40
1.30
1.20
1.10
1.00
Polydispersity of the MWD
0
20
40
60
80
100
Monomer Conversion (%)

(B)

Figure 3

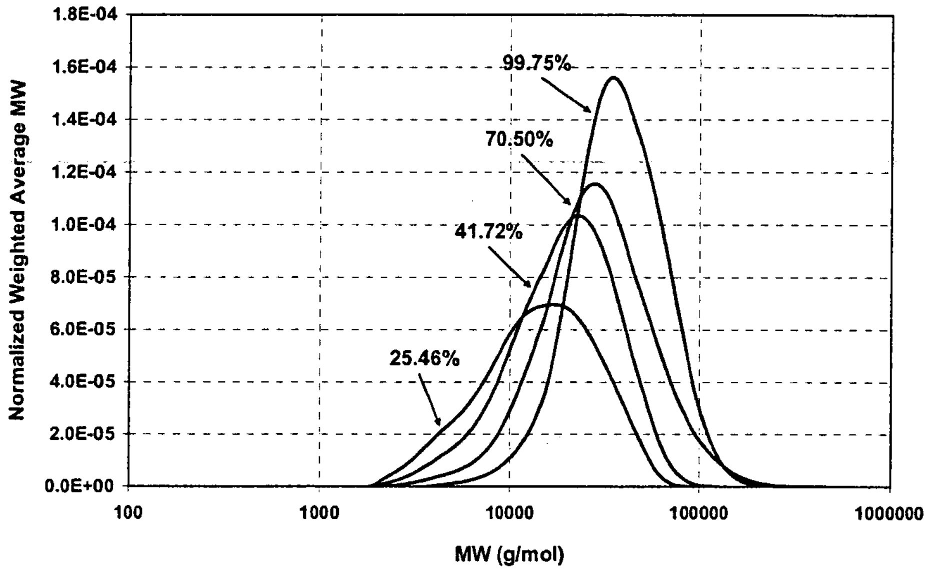
1.8E-04
1.6E-04
1.4E-04
1.2E-04
1.0E-04
8.0E-05
6.0E-05
4.0E-05
2.0E-05
0.0E+00
Normalized Weighted Average MW
99.75%
70.50%
41.72%
25.46%
100
1000
10000
100000
1000000
MW (g/mol)

Figure 4

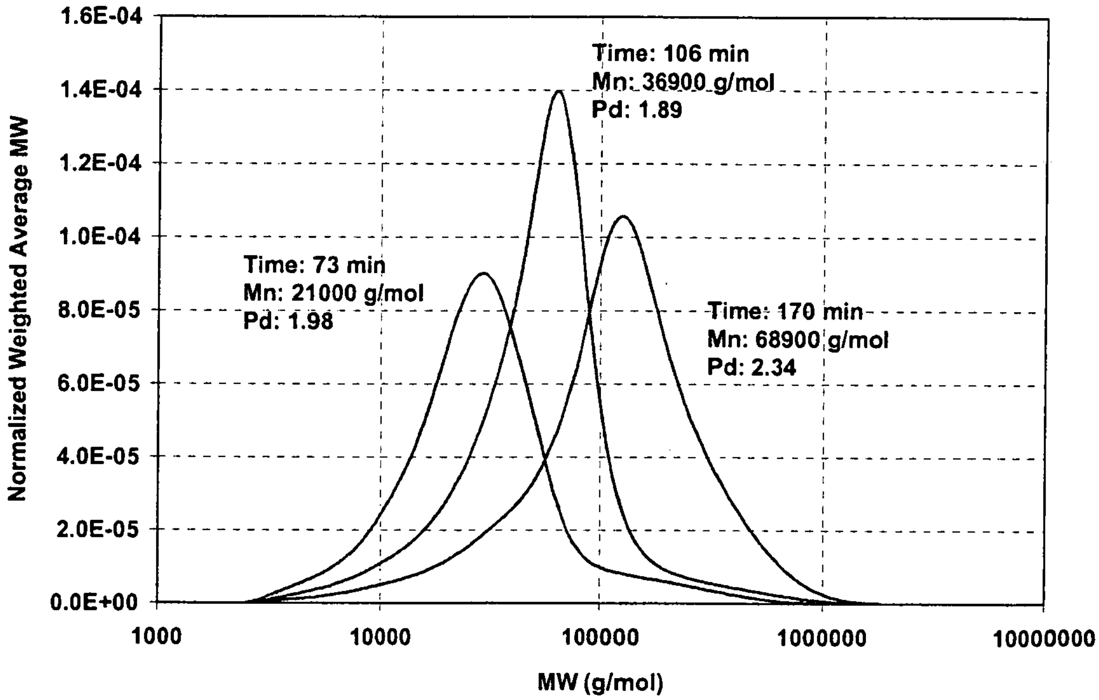
1.6E-04
1.4E-04
1.2E-04
1.0E-04
8.0E-05
6.0E-05
4.0E-05
2.0E-05
0.0E+00
Normalized Weighted Average MW
1000
10000
100000
1000000
10000000
MW (g/mol)
Time: 106 min
Mn: 36900 g/mol
Pd: 1.89
Time: 73 min
Mn: 21000 g/mol
Pd: 1.98
Time: 170 min
Mn: 68900 g/mol
Pd: 2.34

Figure 5

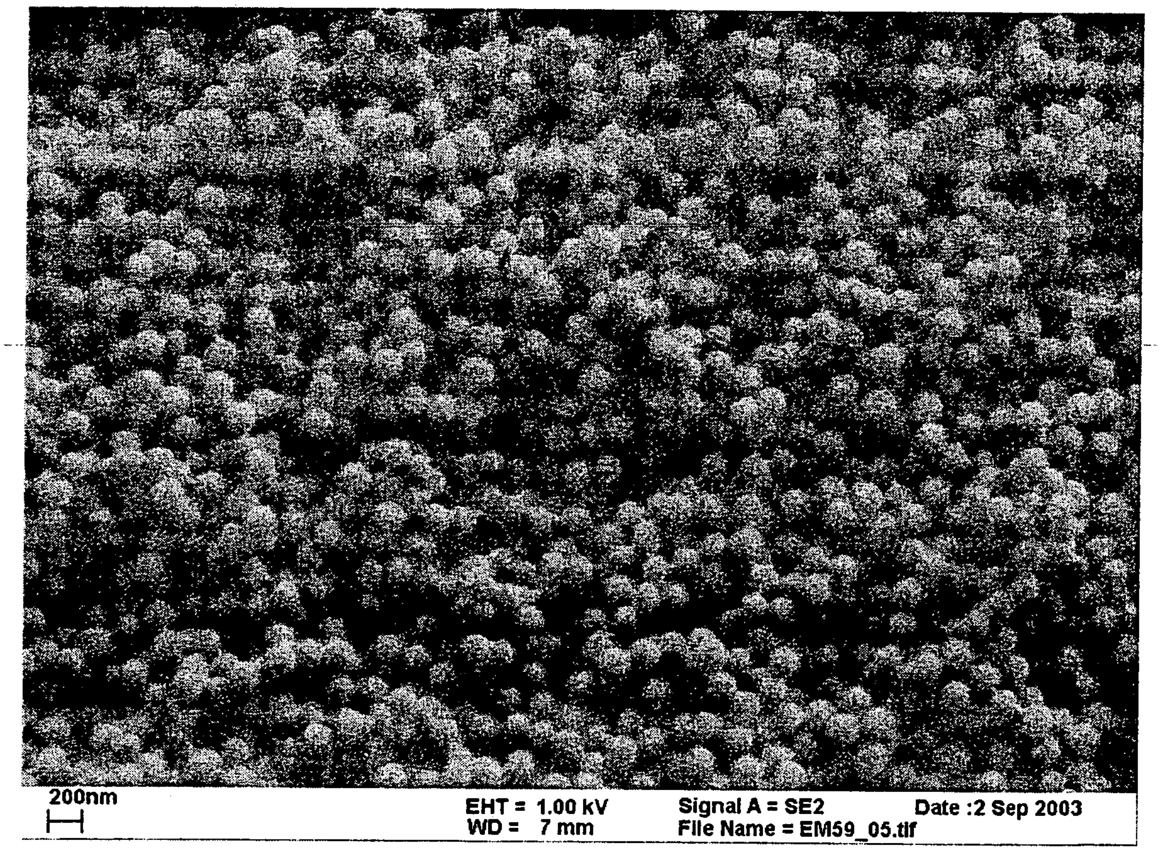
200nm
EHT = 1.00 kV
WD = 7 mm
Signal A = SE2
File Name = EM59_05.tif
Date :2 Sep 2003

Figure 6

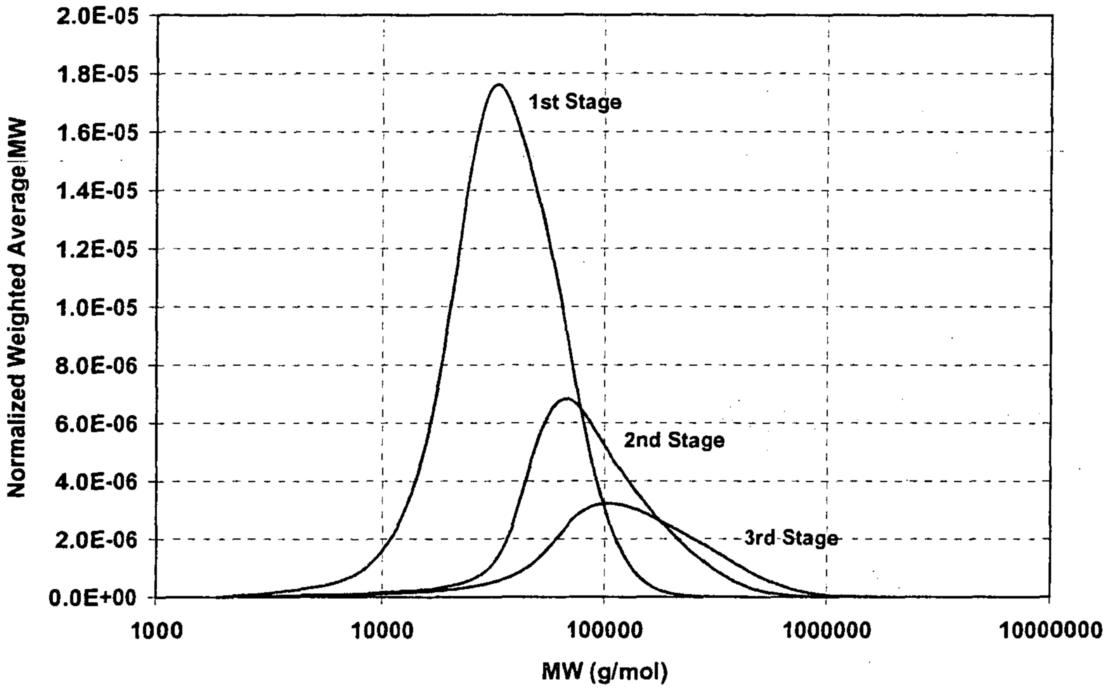
2.0E-05
1.8E-05
1.6E-05
1.4E-05
1.2E-05
1.0E-05
8.0E-06
6.0E-06
4.0E-06
2.0E-06
0.0E+00
Normalized Weighted Average MW
1st Stage
2nd Stage
3rd Stage
1000
10000
100000
1000000
10000000
MW (g/mol)

Figure 7

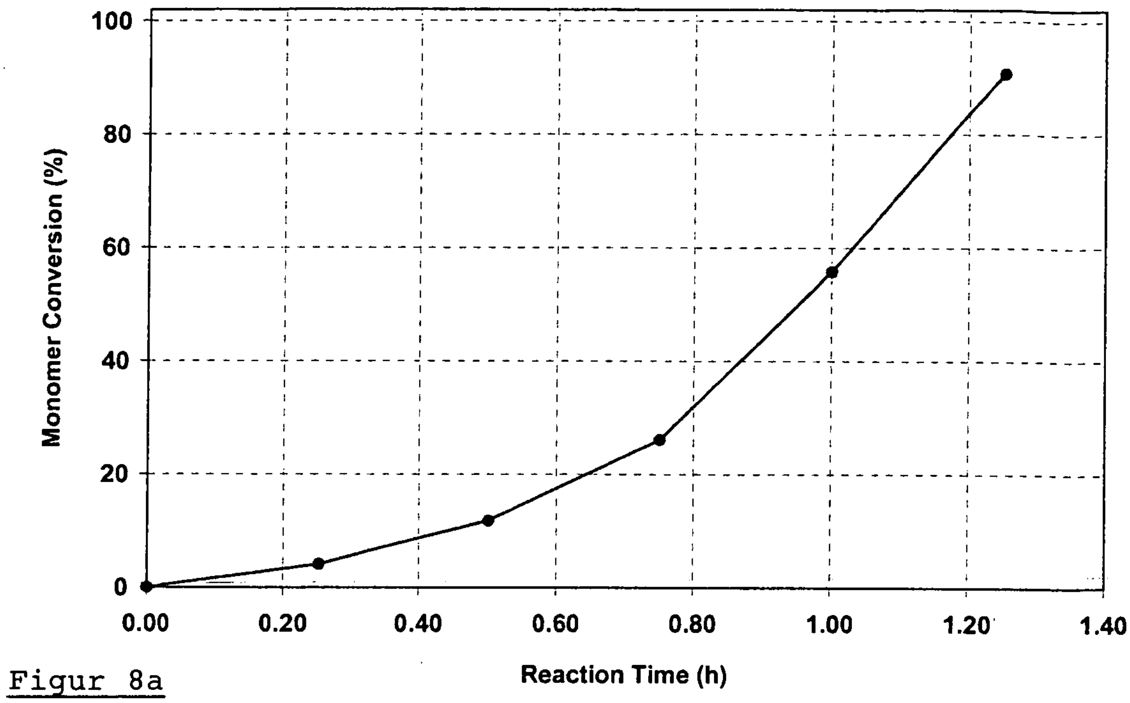


Figur 8a

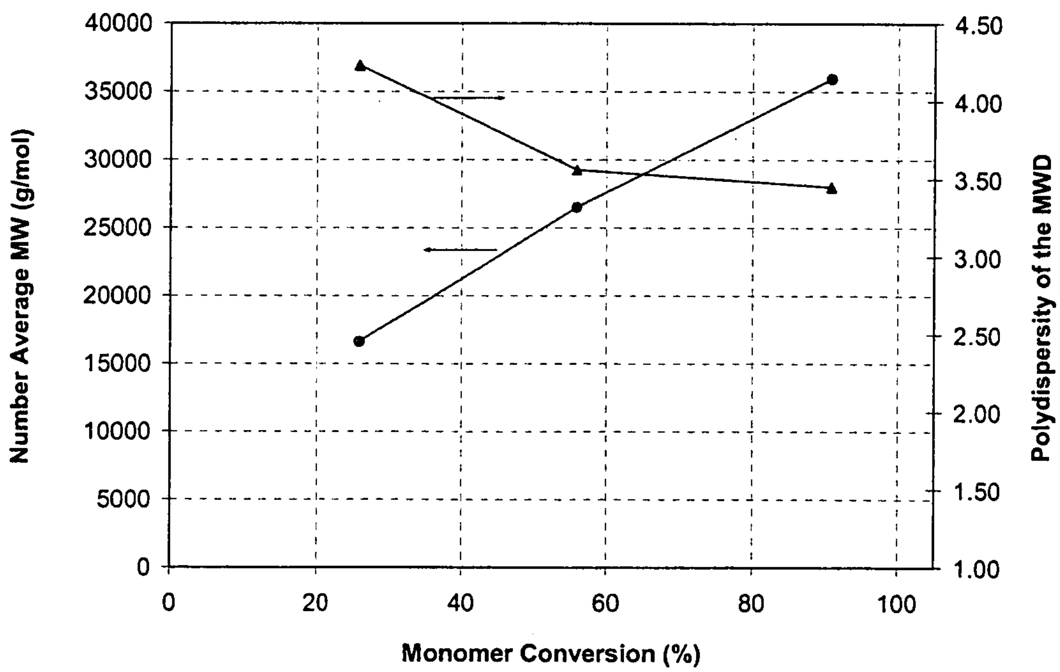


Figure 8b

European Patent Office

# EUROPEAN SEARCH REPORT

Application Number
EP 03 02 5935

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | STUART W. PRESCOTT, METHEW J. BALLARD, EZIO RIZZARDO, ROBERT G. GILBERT: "Succesful use of RAFT techniques in seeded emulsion polymerization of styrene: Living character, RAFT agent transport and rate of polymerization" MACROMOLECULES, [Online] vol. 35, 6 April 2002 (2002-04-06), pages 5417-5425, XP002286930 DOI: 10.1021/ma011840g Retrieved from the Internet: URL:http://pubs3.acs.org/acs/journals/doilookup?in_doi=10.1021/ma011840g> [retrieved on 2004-07-02] * the whole document * | 1-5, 10-25 | C08F293/00 C08F2/38 |
| X | US 2003/120101 A1 (LAI JOHN TA-YUAN) 26 June 2003 (2003-06-26) * paragraphs [0016] - [0031] * | 1-5, 10-25 | |
| A,D | EP 1 205 492 A (ETHZ) 15 May 2002 (2002-05-15) * the whole document * | 1-25 | TECHNICAL FIELDS SEARCHED (Int.Cl.7) C08F |
| A | ANTON SEBENIK: "Living free-radical block copolymerisation using thio-iniferters" PROG. POLYM. SCI., vol. 23, 1998, pages 875-917, XP002285642 * the whole document * | 1-25 | |

The present search report has been drawn up for all claims

| Place of search | Date of completion of the search | Examiner |
|---|---|---|
| Munich | 5 July 2004 | Gold, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3
EPO FORM 1503 03.82 (P04C01)

## ANNEX TO THE EUROPEAN SEARCH REPORT ON EUROPEAN PATENT APPLICATION NO. EP 03 02 5935

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2004

| Patent document cited in search report | Publication date | Patent family member(s) | Publication date |
|---|---|---|---|
| US 2003120101 A1 | 26-06-2003 | US 6596899 B1 | 22-07-2003 |
| | | WO 2004037780 A1 | 06-05-2004 |
| | | US 2004073056 A1 | 15-04-2004 |
| | | AU 2782601 A | 27-08-2001 |
| | | CA 2399690 A1 | 23-08-2001 |
| | | EP 1255731 A1 | 13-11-2002 |
| | | JP 2003522816 T | 29-07-2003 |
| | | WO 0160792 A1 | 23-08-2001 |
| | | US 2003187138 A1 | 02-10-2003 |
| | | US 2003233006 A1 | 18-12-2003 |
| EP 1205492 A | 15-05-2002 | EP 1205492 A1 | 15-05-2002 |

EPO FORM P0459

For more details about this annex : see Official Journal of the European Patent Office, No. 12/82